# EUROPEAN PATENT SPECIFICATION

(11) **EP 3 699 768 B1**
(45) Date of publication and mention of the grant of the patent: **04.12.2024**
(21) Application number: 20154187.7
(22) Date of filing: 28.01.2020
(51) Int. Cl.: G06F 13/16, G06F 13/362, G06F 12/02

(54) **EXTENDED MODE (XM) BUS MODE CHANGE, CONFIGURATION REGISTER ACCESSES AND BROADCAST / MULTI-CAST TRANSACTIONS TO DEVICES ON A XM BUS**
BETRIEBSMODUSÄNDERUNG EINES BUSSES MIT ERWEITERTEM BETRIEBSMODUS (XM), KONFIGURATIONSREGISTERZUGRIFFE UND BROADCAST-/MULTICAST-TRANSAKTIONEN AN VORRICHTUNGEN AUF EINEM BUS MIT ERWEITERTEM BETRIEBSMODUS (XM)
CHANGEMENT DE MODE BUS À MODE ÉTENDU (XM), ACCÈS DE REGISTRE DE CONFIGURATION ET TRANSACTIONS DE DIFFUSION/MULTIDIFFUSION VERS DES DISPOSITIFS SUR UN BUS XM

(30) Priority: 22.02.2019 US 201916283498
(43) Date of publication of application: 26.08.2020
(73) Proprietor: INTEL Corporation, Santa Clara, CA 95054 (US)
(72) Inventor: VENKATRAMAN, Girish C., 560066 Bangalore (IN); BHASKAR, Rajesh, 560093 Bangalore (IN); VERGIS, George, Portland, Oregon 97229 (US); GOLES, John R., Folsom, California 95630 (US)
(74) Representative: Rummler, Felix

(56) References cited:
- WO-A1-2010/016817
- US-A- 5 729 152
- US-A1- 2004 256 638

## Description

### Field

The present invention relates to the technical field of computing, and, in particular, to apparatus, computer readable media and methods related to configuration of memory module registers and broadcast or multicast transactions to devices connected on an XM bus.

### Background

The Joint Electron Device Engineering Council (JEDEC) is currently producing an XM Specification (XMS) for use in memory devices, such as, for example, dual in-line memory modules (DIMMs). The XMS describes a 12.5 Mbps interface (XM interface) intended to replace existing serial input / output interfaces that are used to communicate with serial presence detect (SPD) modules of DIMMs, such as, for example, the I2C/SMBUS interface. It is expected that the proposed XM interface will initially be used on DDR5 DIMMs, and in particular on servers, due to its high bandwidth and reduced lower end voltage rail (one volt).

The XMS defines registers and control flag bits that must be implemented by compliant connected devices, such as, for example devices within a DIMM. In general, a host computer or processor may repeatedly need to access registers with identical offsets across various connected devices in order to configure, control and modify device behavior. Currently, host computers access these registers and consume significant bus latency, area and power. Moreover, while currently supported broadcast transfers may combine a few control flags for all devices, if even one bit is different on one of the receiving devices, the host's broadcast command is rendered unusable.

US 5729152 discloses a memory device which utilizes a plurality of memory modules coupled in parallel to a master I/O module through a single directional asymmetrical signal swing (DASS) bus. The structure provides an I/O scheme having symmetrical swing around half the supply voltage, high through-put, high data bandwidth, short access time, low latency and high noise immunity.

The scope of protection is defined by the appended claims.

### Brief Description of the Drawings

Figure 1 illustrates an example system in accordance with various embodiments.
Figure 2 illustrates an example access format, in accordance with various embodiments.
Figure 3A illustrates an example of the access format of Figure 2, adapted for a full broadcast to XM protocol registers, in accordance with various embodiments.
Figure 3B illustrates an example of the access format of Figure 2, adapted for a selective broadcast (multicast) to XM protocol registers, in accordance with various embodiments.
Figure 4 illustrates an example format for group addressing of XM protocol registers, in accordance with various embodiments.
Figure 5 illustrates an example format for a full broadcast to device registers, in accordance with various embodiments.
Figure 6 illustrates an example format for a selective broadcast (multicast) to device registers, in accordance with various embodiments.
Figure 7 illustrates an example format for group addressing to device registers, in accordance with various embodiments.
Figure 8 illustrates an alternate enhanced format for a full broadcast to XM protocol registers using masking for each payload byte transmitted in the command, in accordance with various embodiments.
Figure 9 illustrates an example process for a read of XM registers, in accordance with various embodiments.
Figure 10 illustrates an example format for a host identifier (HID) assignment transaction in accordance with various embodiments.
Figure 11 illustrates an example update of a DIMM_ID of devices provided on the DIMM via a host computer full broadcast command, in accordance with various embodiments.
Figure 12 illustrates an overview of the operational flow of a process for obtaining, by a hub of a memory module, a memory module identifier, receiving a broadcast DIMM_ID propagation command from a host, modifying the DIMM_ID of the command, and propagating the command to all devices on the memory module, in accordance with various embodiments.
Figure 13 illustrates a block diagram of a computer device suitable for practicing the present disclosure, in accordance with various embodiments.
Figure 14 illustrates an example computer-readable storage medium having instructions configured to practice aspects of the processes of Figures 2-12, in accordance with various embodiments.

### Detailed Description

In embodiments, a device includes an input interface to receive a broadcast command from a host computer, the broadcast command including an access mode indication, and decoding circuitry coupled with the interface. The decoding circuitry is to determine, based at least in part on the received access mode indication, that the broadcast command is directed to access one or more pre-defined setup or control registers of one or more devices, or to access one or more internal registers of the one or more devices, and, in response to the determination, implement the access to the setup or control registers, or to the one or more internal registers. In embodiments, the device is disposed on a memory module coupled to the host computer.

In embodiments, one or more non-transitory computer-readable storage media include a set of instructions, which, when executed by a device provided in a memory module, cause the device to receive a broadcast command from a host computer. In embodiments, the broadcast command is directed to writing of setup or control data to one or more registers of one or more devices beginning at an offset, and includes a device address and device address masking data. When executed, the instructions further cause the device to apply the device address masking data to mask a portion of the device address, determine if an unmasked portion of the device address matches a corresponding portion of an address of the device; and in response to the determination, to write the data to the one or more registers of the device beginning at the offset.

In embodiments, a method includes receiving, at a DIMM, a broadcast command from a host computer, the broadcast command including an access mode indicator and a register offset value, and decoding the access mode indicator to determine that a protocol register access mode is indicated. The method further includes identifying, based at least in part on the access mode indicator and the register offset value, that the command is a DIMM identifier (DIMM_ID) propagation command directing a receiving device to write a DIMM_ID value to the protocol register indicated by the offset, in response to the identification, modifying the command to replace a portion of the DIMM_ID with a local DIMM identifier, and propagating the modified command to all devices on the DIMM over a local bus.

In the following description, various aspects of the illustrative implementations will be described using terms commonly employed by those skilled in the art to convey the substance of their work to others skilled in the art. However, it will be apparent to those skilled in the art that embodiments of the present disclosure may be practiced with only some of the described aspects. For purposes of explanation, specific numbers, materials and configurations are set forth in order to provide a thorough understanding of the illustrative implementations. However, it will be apparent to one skilled in the art that embodiments of the present disclosure may be practiced without the specific details. In other instances, well-known features are omitted or simplified in order not to obscure the illustrative implementations.

In the following detailed description, reference is made to the accompanying drawings which form a part hereof, wherein like numerals designate like parts throughout, and in which is shown by way of illustration embodiments in which the subject matter of the present disclosure may be practiced.

For the purposes of the present disclosure, the phrase "A and/or B" means (A), (B), (A) or (B), or (A and B). For the purposes of the present disclosure, the phrase "A, B, and/or C" means (A), (B), (C), (A and B), (A and C), (B and C), or (A, B and C).

The description may use perspective-based descriptions such as top/bottom, in/out, over/under, and the like. Such descriptions are merely used to facilitate the discussion and are not intended to restrict the application of embodiments described herein to any particular orientation.

The description may use the phrases "in an embodiment," or "in embodiments," which may each refer to one or more of the same or different embodiments. Furthermore, the terms "comprising," "including," "having," and the like, as used with respect to embodiments of the present disclosure, are synonymous.

The term "coupled with," along with its derivatives, may be used herein. "Coupled" may mean one or more of the following. "Coupled" may mean that two or more elements are in direct physical or electrical contact. However, "coupled" may also mean that two or more elements indirectly contact each other, but yet still cooperate or interact with each other, and may mean that one or more other elements are coupled or connected between the elements that are said to be coupled with each other. The term "directly coupled" may mean that two or elements are in direct contact.

As used herein, the term "circuitry" may refer to, be part of, or include an Application Specific Integrated Circuit (ASIC), an electronic circuit, a processor (shared, dedicated, or group) and/or memory (shared, dedicated, or group) that execute one or more software or firmware programs, a combinational logic circuit, and/or other suitable components that provide the described functionality.

As used herein, including in the claims, the term "chip" may refer to a physical integrated circuit (IC) on a computer. A chip in the context of this document may thus refer to an execution unit that can be single-core or multi-core technology.

As used herein, including in the claims, the term "processor" may refer to a logical execution unit on a physical chip. A multi-core chip may have several cores. As used herein the term "core" may refer to a logical execution unit containing an L1 (lowest level) cache and functional units. Cores are understood as being able to independently execute programs or threads.

As noted above, the XMS defines registers and control flag bits that compliant connected devices must implement. Currently, in order to configure, control and modify device behavior, a host repeatedly must access registers with identical offsets across devices. For example, if a host wants to configure a voltage regulator on each of sixteen DIMMs in system memory, which requires writing to the same register in each voltage regulator, a separate access must occur for each voltage regulator. Thus, to save configuration time on heavily loaded buses, which may connect to as many as one hundred and twenty devices, as well as to save boot time, in embodiments, a broadcast capability to update or configure defined bits across all devices is facilitated. In embodiments, the broadcast capability utilizes, inter alia, an additional header, described in detail below.

In embodiments, a host may thus chain the configuration of read and write accesses of memory devices, e.g., DIMMs, and may thus amortize the cost of an additional header across multiple accesses. Moreover, sequential register accesses on the same device do not incur any additional cost, where the device auto increments the register offset after each register access. In embodiments, the broadcast of device control information is made more efficient using masks to control bits so as to facilitate group addressing. In embodiments, an example message format is generic, and may be used to broadcast to any register on a device.

In accordance with various embodiments, functionality supported by the current XMS may be significantly improved to facilitate broadcast and multicast messaging across an XMS command bus. To better understand these improvements to the current XMS, a brief summary of device configuration and register addressing under the current XMS is next described.

Although XMS currently does define a broadcast format, intended to send a broadcast command to all devices on a bus, the format is only for writes, and is also specific to a set of bits on a device. The format uses a header followed by the specific bits for each device to be reached. The header includes a byte of all 0s, comprising a seven bit device address (000 0000) and one RnW bit (0), the 0 indicating a write access. The current format is as follows:

| | | | | |
|---|---|---|---|---|
| (Start | -> {device address[6:0] = 0x00,RnW=0} | | -> ACK/NACK; | |
| | -> {Specific Device Bits} | -> T; | | |
| | -> {Specific Device Bits} | -> T | | -> Stop) |

The fields of this broadcast format are specifically defined, and cannot be scaled and used for expanded purposes. The number of specific bits is limited to four bytes, and, moreover, there are no specific bit or field masking capabilities. Thus, there is no way for a sub-set of devices to be addressed, nor is there a way to access only a sub-set of these specific bits. Additionally, the current XMS format does not provide a mechanism for memory reads. The broadcast may only be used for write accesses. Given that a host may often need to read XM registers on various memory module devices, and because this is the only current transaction for which a broadcast address may be specified, a read is not possible.

The XMS also provides generic read/write formats, which include device register offset XM mode specified register accesses. However, as these are for a memory access to one register of one device, these currently supported transactions on an XM bus are inefficient.

A configuration write to one device at a time consumes at least two bytes of header. These bytes are for an individual device address and a device register offset, respectively, and are shown in bold below:

| | | | | |
|---|---|---|---|---|
| **(Start** | -> **device address [6:0], RnW=0** | | -> ACK/NACK; | |
| | -> **device register offset, RnW=0** | | ->ACK/NACK; | |
| | -> WRdata | -> T; | | |
| | -> WRdata | -> T | | -> Stop) |

Similarly, a configuration read to a device consumes at least three bytes of header, with a read (RnW = 1) following a write access (RTnW=0), as shown in bold:

| | | | | |
|---|---|---|---|---|
| **(Start** | -> **device address[6:0],RnW=0** | | **-> ACK/NACK;** | |
| | -> **device register offset, RnW=0** | | ->ACK/NACK; | |
| **ReStart** | **-> device address[6:0],RnW=1** | | **-> ACK/NACK**; | |
| | -> WRdata | -> T; | | |
| | -> WRdata | -> T | | -> Stop) |

Because, as shown above, a read or a write must address a specific device, and a specific register on that device, device register accesses of the same transfer type, either read or write (Rd/Wr), to the same register of other XM devices on the bus cannot currently be combined or chained. Thus, the two or three headers as shown above, as the case may be, must be repeated for each separate device access, which results in a performance inefficiency. Additionally, as noted, conventional broadcast accesses do not have any masking capability for control or setup bits. As a result, if a control value is managed differently for even one device on the bus, then a broadcast access cannot currently be used at all for any device. This is because the set of bits are defined to be common for all devices, the functionality per bit position remains the same for all devices. This limits usages where only a control bit had to be toggled on only a subset of the connected devices.

In general, servers may have multiple double data rate (DDR) memory modules connected to their system-on-chip (SOC). The XMS allows up to one hundred twenty connected devices, including SPD devices, that require repeated identical register offset accesses and control or setup changes. Serializing register accesses under the XMS as currently specified, which, in addition to not having mask bits for controls, makes register access and broadcast transfers on the XM bus inefficient, and also consumes significant latency, area and power.

Finally, there is currently no workable method to enable access of the same device-type, e.g., a power management integrated circuit (PMIC), across all DIMMs of a server or computing system, as in a group cast directed to every PMIC in every DIMM.

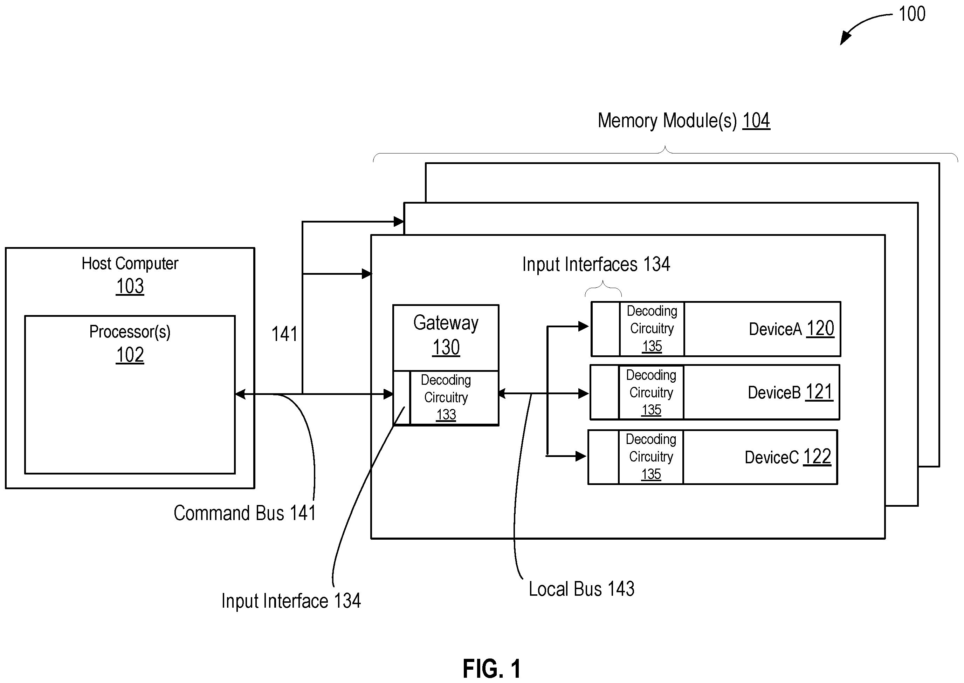

Figure 1 illustrates an example system in accordance with various embodiments. With reference to Figure 1, there is a host computer 103, which includes one or more processors 102. Host computer 103 may be a SOC, as noted above. There are also shown memory module(s) 104, which may be, for example, a set of DIMMs installed in a motherboard of host computer 103. In embodiments, host computer 103, via processor(s) 102, sends broadcast commands to memory modules 104 over command bus 141. Command bus 141 is different than a data bus (not shown) between processor 103 and a memory module 104. Command bus 141 carries configuration register accesses and broadcast / multicast transactions to devices connected to it. Command bus may be an XM bus, as noted above. In embodiments, commands and transactions sent across command bus 141 are received and processed by gateway 130. Gateway 130 may be, for example, a hub of a DIMM. Gateway 130 includes an input interface 134, connected to command bus 141, through which the command is received, and decoding circuitry 133 to identify specific commands from the host computer, and in some cases take actions in response, including to modify bits of the command, but in most cases to pass the command as received to connected devices (over local bus 143) on the memory module. Thus, gateway 130 is connected to a set of devices 120, 121 and 122 that are also provided on the DIMM, such as, for example, temperature sensors, voltage regulators and flash memory units with timing data, SPDs or registering clock drivers (RCDs).

In embodiments, there may be more, or fewer, DIMMs than are shown in Figure 1, and there may be more, or fewer, devices on a DIMM than are shown in Figure1. As noted, gateway 130 is connected to the set of devices over local bus 143. Local bus is also XM compliant, and is, therefore, a XM bus. Devices 120, 121 and 122 may sometimes be referred to herein as devices "behind the hub", or "behind the gateway", and registers of these devices may sometimes be referred to herein as being registers "behind the XM protocol." In embodiments, devices 120, 121 and 122 each include an input interface134 connected to local bus 143, and decoding circuitry 135 to decode and implement broadcast commands that are received by the respective devices, via the input interface, through gateway 130, and ultimately from host computer 103.

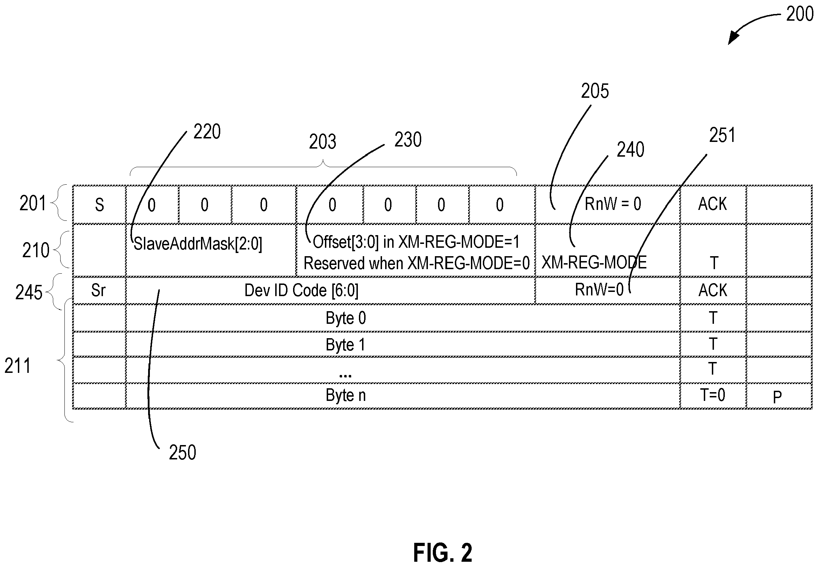

Figures 2 through 8, next described, present example commands, or portions of commands, that are received by devices in accordance with various embodiments. The commands may be directed to one or more XM protocol registers of one or more devices, or may be directed to one or more internal device registers of one or more devices. As noted above, in embodiments, the commands are received via an input interface of a device, and decoded by decoding circuitry of the device.

Figure 2 illustrates an example access format for a broadcast command, in accordance with various embodiments. The access format includes an additional header byte 210, that follows a conventional XMS "start" byte 201, as described above, indicated by the "S." Additional header byte 210 is herein termed "additional" because it is not currently provided for in the XM Specification, and currently not used in the rather limited current broadcast command format. Start byte 201 has the standard broadcast call-address 203 of 0x00, and a read not write bit "RnW" 205 set to 0, indicating a write command. Additional header byte 210 includes a three bit slave address mask field 220, here labelled "SlaveAddrMask[2:0]." In this context "slave" refers to a device that the broadcast (groupcast, or multicast) command is intended for. In embodiments, slave address mask field 220 indicates the number of slave address bits that a receiving device is to mask for each subsequent transaction prior to determining if its address matches the device address provided in the broadcast command 200. The masking functionality thus enables group addressing, where a host computer may access the same family of devices, across all of the DIMMs in memory, such as, for example, a PMIC on each DIMM, in a single transaction.

The value of slave address mask field 220 gives the number of least significant bits (LSBs) of a device identifier that are to be ignored. For example, if the field Set SlaveAddrMask[2:0] 220 is set to "011b", that would mean that the least significant three bits of the seven bit device identification code (Dev ID Code) 250 would be masked, leaving a four bit ID code that would identify a whole group of devices. This enables all slave devices whose four most significant bits (MSBs) match the unmasked portion of Dev ID Code, e.g., Dev ID Code [6:3], to be addressed with a single transaction.

It is here noted that in embodiments, in an example system which is limited to eight DIMMs, addresses of devices may be arranged such that the MSD four bits indicate a type of device, and the LSB three bits indicate the DIMM number on which the device is provided. In such embodiments, it is possible to all devices of the same type (which are identified by the MSB four bits, across all eight DIMMs, by masking the LSB three bits, as shown in Figure 2, where SlaveAddrMask[2:0] 220 is set to "011b", to mask the least significant three bits of the seven bit device identification code (Dev ID Code) 250.

Additional header byte 210 includes a three bit slave address field 220, named, for example, "SlaveAddrMask[2:0]", a four bit offset field 230 named, for example, Offset[3:0], and an access mode field 240, named, for example, "XM-REG-MODE." These are next described.

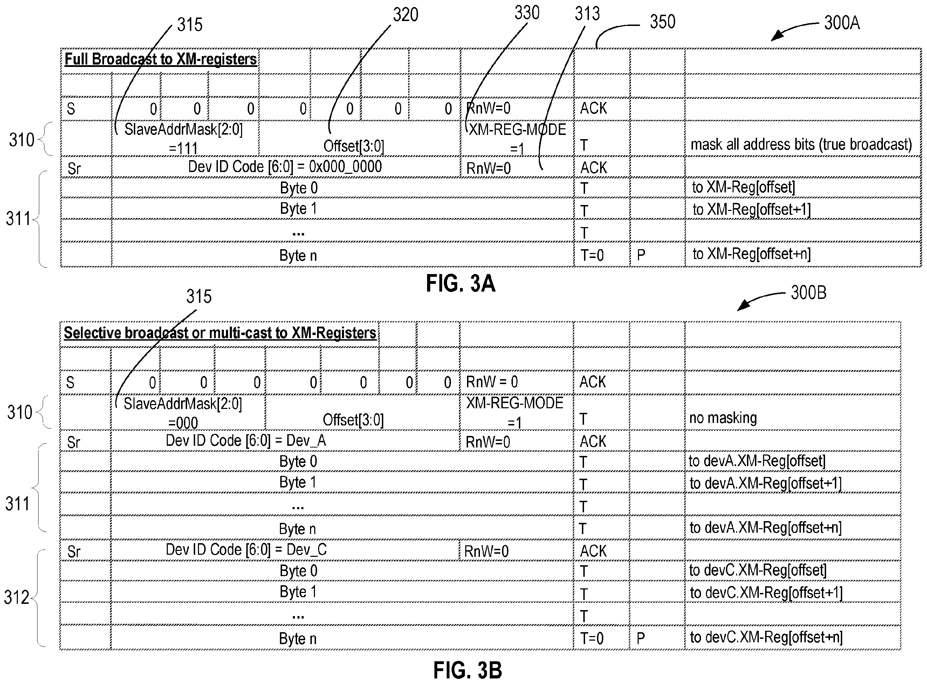

In embodiments, slave address mask field 220 is used to indicate how many least significant bits (LSBs) of a device address are to be ignored by a device receiving the command. The more bits of a device address, for example, "Dev ID Code[6:0]" 250 shown in Figure 2, that are ignored, the more devices that match to the unmasked portion of the address, and the more that respond to the broadcast command. In embodiments, this masking feature is what allows for full broadcast, selective broadcast, or group addressing, as described below with reference to Figures 3-8.

In the examples of Figures 2-10 based on the XMS, it is assumed that a device address is 7 bits long. In other embodiments, a device address may be more, or less, bits in length. Thus, slave address mask field 220 indicates masking of from zero to seven bits of that address. For example, if SlaveAddrMask[2:0] = '111', then all seven bits of the address are masked, and the command is broadcast to all connected devices. Similarly, if SlaveAddrMask[2:0] = '000', then all bits of each device address provided in the command are read, and there is no masking. Additionally, if SlaveAddrMask[2:0] = '011', which has a value of "3", then the three LSBs of the address are masked. Thus, all slave devices whose four most significant bits (MSBs) match are addressed in a single transaction, and respond to the command.

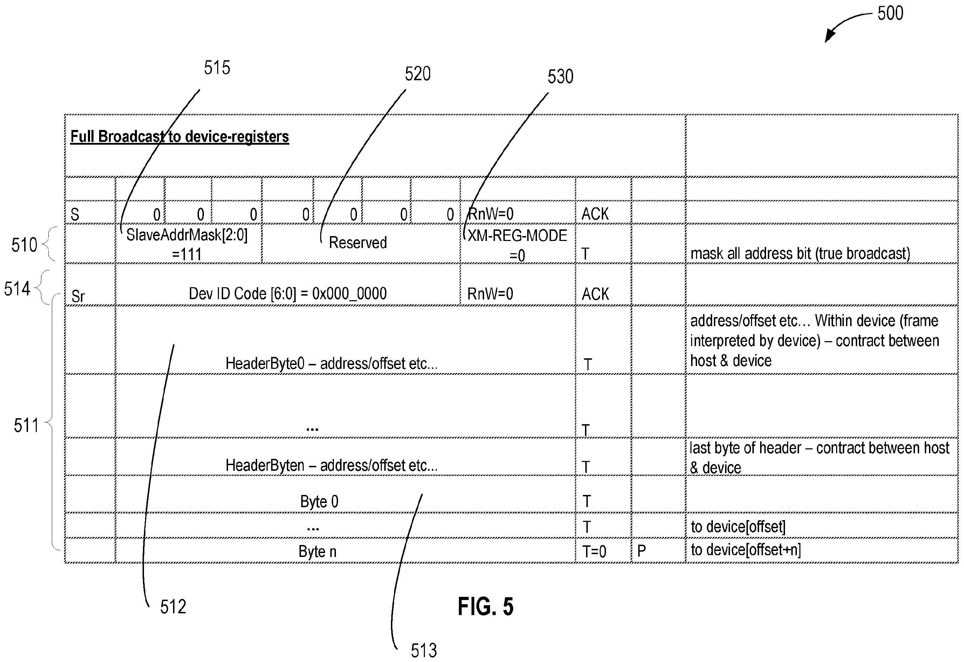

Continuing with reference to Figure 2, four bit offset field 230, referred to as "Offset[3:0]" in Figure 2, is used in only one of two possible access modes available according to various embodiments. It is recalled that, in embodiments, in a first access mode a broadcast command may be a device setup or control command, and thus the command intends to access a register that is required to be provided by the XM protocol, such as, for example, packet error correction enable (PEC_EN), PARITY EN, IF_SEL etc. (this access mode is referred to hereinafter as a "protocol register" access). Similarly, in embodiments, in a second access mode, the intent is for the broadcast command to access device registers behind the XM protocol (this access mode is referred to hereinafter as a "device register" access), which may have different access formats, such as, for example, SPD, RCD, PMIC etc. In embodiments, in the second access mode, a conventional transaction under the XMS follows additional header byte 210. This transaction begins with the "restart" (Sr) byte 245, as will be described below in connection with Figures 5-7. In embodiments, offset field 230 is only used in the first access mode, and is reserved in commands that specify the second access mode. Thus, in the example shown in Figure 2, Offset[3:0] 230 is used to specify which XM protocol register(s) on a receiving device the command is directed to. Because Offset[3:0] is four bits long, fifteen registers on each device may be accessed using a broadcast command which specifies the first access mode, and further specifies an offset value to indicate which register is the first register to be written to.

In embodiments, the access mode of the broadcast command is indicated by access mode field 240. In the example of Figure 2, it is a one bit flag shown as "XM-REG-MODE." In this example, XM-REG-MODE = 1 indicates the first access mode (protocol register access) and XM-REG-MODE = 0 indicates the second access mode (device register access).

In other embodiments, there may be more or less bits in each field, and a header and subsequent units of a command may have more or less bits than one byte.

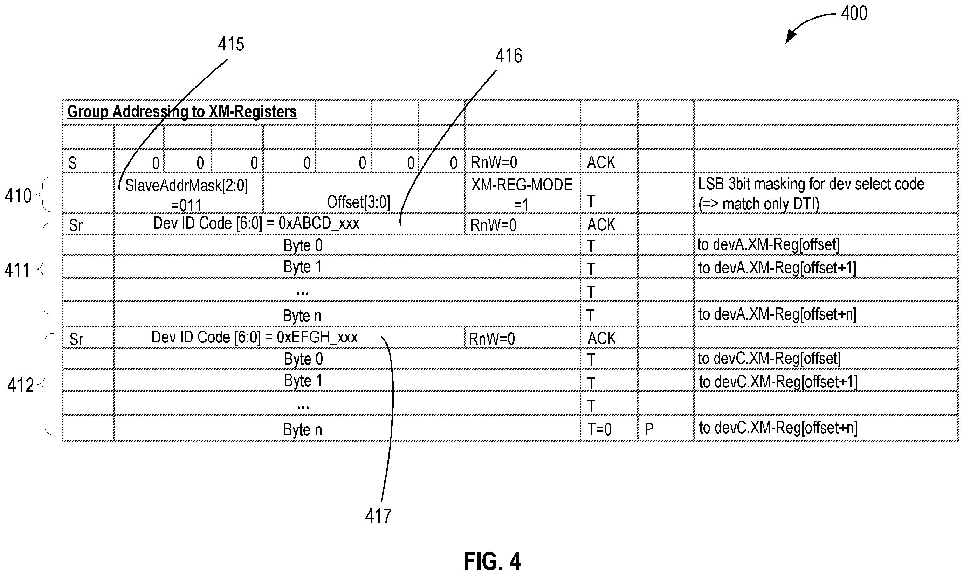

Continuing with reference to Figure 2, additional header byte 210 is followed by Sr transaction 211. Sr transaction 211 begins with Sr byte 245, which specifies a seven bit device address, shown in Figure 2 as "Dev ID Code[6:0]" 250, and a one bit memory access type indicator 251, here a Read not Write bit "RnW." In the examples provided in Figures 2-10, RnW = 0 signifies a write to the register, and RnW = 1 signifies a read to the register. It is understood that for full broadcast, group broadcast or other multiple device commands, the broadcast command will generally be a write, where RnW = 0, as a single command cannot read multiple devices at the same time. The remaining bytes shown in Sr transaction 211 of Figure 2, namely Byte 0 through Byte n, assume a first access mode as shown in either Figure 3A, Figure 3B or Figure 4, described in detail below with reference to those figures. These bytes are thus to be written to each receiving device beginning with a register at a location on each device indicated by Offset[3:0] 230. A slightly different format for the Sr transaction is used for the second access mode, as described below.

In embodiments, devices receiving a broadcast command of the format 200 of Figure 2 decode the slave address mask, the access mode value, and the offset, if present (in the first access mode), and proceed to implement the subsequent bytes provided in the command. In embodiments, using broadcast command format 200 helps a host computer to access equivalent registers across multiple DIMMs to both be more efficient in area and power, as well as to significantly reduce boot time.

Figures 3A, 3B and 4 illustrate different versions of commands specifying the first access mode, all implementing the command format 200 of Figure 2. In these example commands, the command is directed to protocol register access, and thus, where the access mode flag XM-REG-MODE = 1. These are next described.

Figure 3A illustrates an example command 300A for a full broadcast to protocol registers, e.g., XM protocol registers (referred to as simply "XM-registers" in Figures 3A, 3B and 4). Example command 300A may be used, for example, to update an operational mode, such as, for example, PEC enable, or parity enable. Thus, in header 310 of Figure 3A, the slave address mask 315 is ` 111' which indicates that all seven bits of the device address are to be masked. Offset field 320 defines a four bit offset, Offset[3:0], which indicates where the first byte included in the command is to be written on each device. Header 310 also includes access mode flag 330. Because this is a protocol register access (e.g., first access mode), access mode flag 330 equals 1, e.g., XM-REG-MODE = 1.

Continuing with reference to Figure 3A, below header byte 310 there is shown a single Sr transaction 311, where Sr stands for "restart." Only one Sr transaction is shown because this is a full broadcast command, where each device has its XM registers updated in the same way. Sr transaction 311 includes a header byte and several control information bytes. The Sr header byte includes the device address, here "Dev ID Code[6:0] = 0x000_0000", which means every device connected on the XM bus (which allows up to 120 of them) receives command 300A. Sr transaction 311 header byte also includes a read or write (RnW) bit 313 that indicates whether the protocol register access is a read (RnW = 1) or a write (RnW = 0). In this example the broadcast is a write access of several XM registers on every XM bus connected device (e.g., all DIMMs in the memory of a computer), so RnW = 0. As shown in Figure 3A, Sr transaction 311 also includes several additional bytes, Byte 0 through Byte n, which are to be respectively written to a series of sequential registers on each device beginning with the XM register at the offset value provided at offset 320. Thus, for example, Byte 0 is to be written to XM-Reg[offset], Byte 1 is to be written to XM-Reg[offset + 1], Byte 2 is to be written to XM-Reg[offset + 2], and finally, Byte n is to be written to XM-Reg[offset + n], as shown.

The symbols shown in column 350 have the same meanings as they do in conventional SMBus and XM protocols, and these represent one bit responses to each byte sent in the command, the response being sent by a device receiving the command. The symbols have the following meanings: S = start; Sr = restart; ACK = acknowledged; T = transition; and P = stop.

Figure 3B illustrates an example command for a selective broadcast to XM protocol registers. With reference to Figure 3B, the example command of Figure 3B is identical in all respects to that of Figure 3A, with two exceptions: the value of slave address mask field 315, and the number of Sr transactions included in the example command, namely Sr transactions 311 and 312. These variants from the example command of Figure 3A will next be described. However, all other aspects of the example command of Figure 3B, being similar to corresponding features of the example command of Figure 3A, will not be described again. Continuing with reference to Figure 3B, the value of slave address mask field 315, namely SlaveAddrMask[2:0], is '000', which means that no bits of the device addresses included in command 300B are to be masked. As a result, each device address listed in Sr transactions 311 and 312 are accessed, but no other addresses are accessed by command 300B.

Continuing with reference to Figure 3B, each of Sr transactions 311 and 312 are similar to Sr transaction 311 of Figure 3A, previously described, with the exception, as noted, that the device address of Device A, in Sr transaction 311, and Device B, in Sr transaction 312, as unmasked, respectively specifically access only these devices, and no other devices.

Figure 4 illustrates an example broadcast command 400 for group addressing of XM protocol registers in accordance with various embodiments. The command is used to broadcast to specified groups of devices, and to multiple XM registers on the respective devices in the group. With reference to Figure 4, the example command of Figure 4 is identical in all respects to that of Figure 3B, with one exception: the value of slave address mask field 415. Slave address mask field 415 indicates that the three LSBs of each address specified in the command, namely device addresses 416 and 417, are to be masked. That means that a device receiving the command only checks for a match of the four MSBs of the sent device addresses 416 and 417 with its own address, and if there is a match the receiving device implements the memory access as specified in the command. Thus, each of device addresses 416 and 417 actually target groups of devices, a group that matches the four MSBs of each device address. This is illustrated in Figure 4 by showing device address 416 as "Dev ID Code [6:0] = 0xABCD xxx", and device address 417 as "Dev ID Code [6:0] = 0xEFGH xxx", to indicate that a receiving device simply ignores the three LSBs of each address.

In all other aspects, the example command of Figure 4 is equivalent to corresponding features of the example command of Figure 3B, will not be described again.

Figures 5 through 7 illustrate example broadcast commands specifying the second mode of access, device register access. These are next described.

In embodiments, it should be insured that register access definitions, including address and offset, are uniform across all devices that are to be commanded as a group, such as in a full or group broadcast. In embodiments, in a broadcast command issued for device register access, lower order bytes of a header carry device register offset information. In embodiments, because this is a mandatory aspect of the XMS the offset is guaranteed to be common across all devices. Thus, in order to use address masking functionality, for multicast or group writes, the groups need to have the same address / register definitions.

Figure 5 illustrates an example format for a full broadcast command to device registers, in accordance with various embodiments. With reference to Figure 5, additional header byte 510 includes a slave address mask 515 with a value of "111". The command operates as a "full broadcast" because all device address bits are masked, and thus every device receiving the command is to implement it. Additional header byte 510 also includes a reserved field 520 of four bits, and a one bit access mode indicator 530. Unlike the example commands of Figures 2, 3A, 3B and 4, the access mode indicator 530 of Figure 5 is, in this example, XM-REG-MODE = 0, which indicates the second access mode, the device register access mode. As noted above, reserved field 520, which is used as a register offset field when the command's access mode is protocol register access, is not used in the device register access mode.

Following additional header 510, is a Sr transaction 511. Continuing with reference to Figure 5, Sr transaction 511 includes an overall header byte 514, followed by a set of header bytes, one for, and specific to, each of n data bytes. Because this command is a full broadcast command the overall header byte 514 of the Sr transaction, provides a 0x000_0000 as the device address, and, as noted, each device receiving command 500, given the slave address mask 515 of '111", ignores all address bits anyway. Overall header byte 514 also has a RnW bit, which here, having value '0', signifies a write to device registers on each device. The header bytes begin at HeaderByte0 512, and the data bytes to be written at each receiving device, at the respective address/offset indicated by the HeaderBytes, begin at Byte 0 513.

Because of the extra header bytes, a second access mode Sr transaction 511 is longer than an Sr transaction in the first access mode, because address/offset information needs to be added, in addition to payload/bytes. Thus, for example, Sr transaction 511 of Figure 5, is longer than Sr transaction 211 of Figure 2.

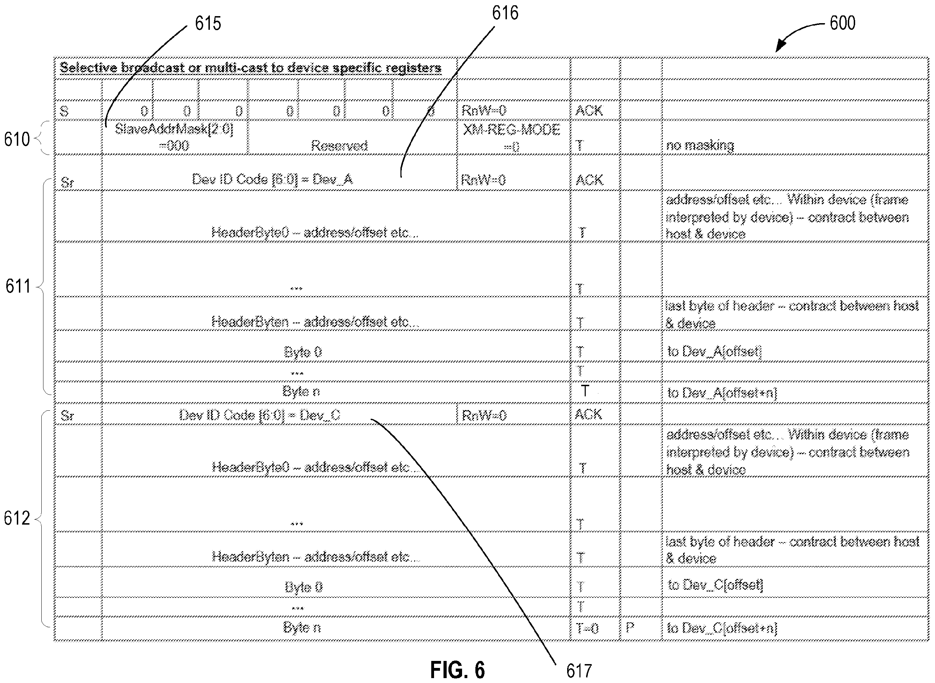

Figure 6 illustrates an example command 600 for a selective broadcast or multicast to device registers, in accordance with various embodiments. With reference to Figure 6, the example command 600 is identical in all respects to example command 500 of Figure 5, with two exceptions: the value of slave address mask field 615, and the number of Sr transactions included in the example command, namely Sr transactions 611 and 612. These variants from the example command of Figure 5 will next be described. However, all other aspects of the example command of Figure 6, being similar to corresponding features of the example command of Figure 5, will not be described again. Continuing with reference to Figure 6, the value of slave address mask field 615, namely SlaveAddrMask[2:0], is '000', which means that no bits of the device addresses included in command 600 are to be masked. As a result, each device address listed in Sr transactions 611 and 612 are accessed, respectively the device ID codes of De v _A 616 and Dev_B 617, but no other addresses are accessed by command 600. Thus for each of devices Dev_A and Dev_B, their respective Sr transaction includes a set of header bytes, to supply an address and offset for each of Byte 0 through Byte n, followed by the actual bytes, Byte 0 through Byte n, that are to be respectively written to device registers at each corresponding offset.

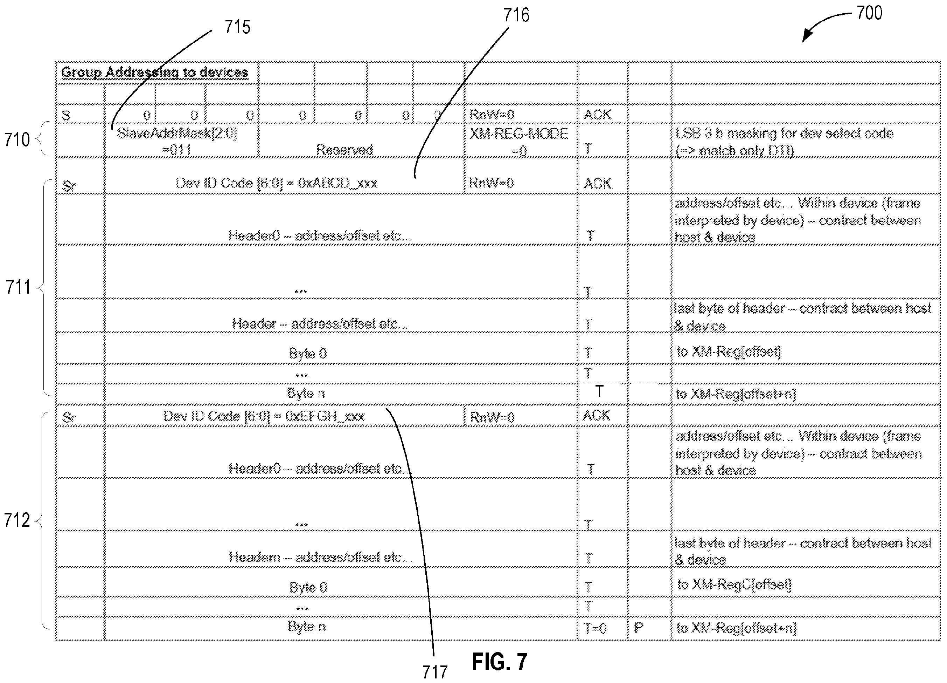

Figure 7 illustrates an example broadcast command 700 for group addressing to device registers, in accordance with various embodiments. The command is used to broadcast to specified groups of devices, and to multiple device registers on the respective devices in the group. With reference to Figure 7, example command 700 is identical in all respects to that of Figure 6, with one exception: the value of slave address mask field 715. Slave address mask field 715 indicates that the three LSBs of each address specified in broadcast command 700, namely device addresses 716 and 717, are to be masked. This masking of the lower three LSBs of each address means that a device receiving command 700 only checks for a match of the four MSBs of the sent device addresses 716 and 717 with its own address. If there is a match, the receiving device implements the memory access as specified in the command. Thus, each of device addresses 716 and 717 actually target groups of devices, a group that matches the four MSBs of each device address. This is illustrated in Figure 7 by showing device address 716 as "Dev ID Code [6:0] = 0xABCD_xxx", and device address 717 as "Dev ID Code [6:0] = 0xEFGH xxx", to indicate that a receiving device simply ignores the three LSBs of each address. Because in all other aspects the example command 700 of Figure 7 is similar to corresponding aspects of example command 600 of Figure 6, these similar aspects, already descried above, are not described again.

In alternate embodiments, if a broadcast transaction is issued for device control or setup, and thus uses the first access mode, it is followed by control data to all targeted devices. In some embodiments, the control data is provided in multiples of two byte pairs, where each byte pair includes a mask byte and a data byte. In these embodiments, a mask byte bit value of "1" indicates that the device should not process a corresponding bit of control data, and a mask byte bit value of "0" indicates that the device should process the corresponding bit of control data value. Although the addition of a mask byte to precede each control data byte increases the number of bytes transmitted per transaction, it also allows a command to selectively update fields of the protocol register at each indicated offset, which offers significant flexibility.

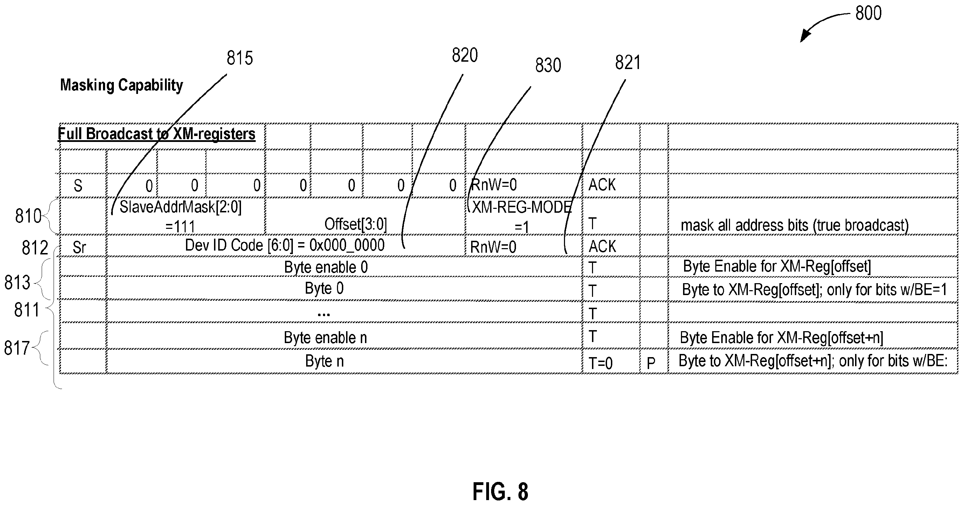

Figure 8 illustrates a full broadcast command according to these alternate embodiments. With reference thereto, Figure 8 depicts an alternate enhanced command format 800 for a full broadcast command to XM protocol registers using masking for each payload byte transmitted in the command, in accordance with various alternate embodiments. Alternate enhanced command format 800 is similar to broadcast command 300A of Figure 3 in all respects, except for the additional masking byte provided before each data byte of Sr transaction 811.

Continuing with reference to Figure 8, given the full broadcast nature of this command, with reference to additional header byte 810, slave address mask 815 is set at a value of '111'. As described above, this means that every device receiving the command ignores all of the bits in the named device address, which is 0x000_000 as shown at device ID code field 820. As noted, broadcast command 800 is directed to XM protocol registers on all devices, and thus XM-REG-MODE = 1 as shown by access mode indicator 830.

Continuing with reference to Figure 8, following additional header byte 810 is a standard Sr transaction 811, which begins with the Sr header byte 812, which indicates a broadcast device address of 0x000_0000, as noted above. It is here noted that when slave address mask 815 is equal to "111", the following device ID code 829 is actually not required. In the example of Figure 8 it is retained to maintain the overall format of the command, but in alternate embodiments and examples it could be removed, as an optimization. The broadcast command is a write command, as shown at RnW bit 821.

Continuing with reference to Figure 8, in the remainder of Sr transaction 811, each control data byte is preceded by a "Byte enable" byte, which is a masking byte, as noted above. Thus, instead of the example of control bytes shown in Figure 3A, in this alternate embodiment,
the byte sequence of the commands includes a {Byte-Enable, Byte} pair per offset. This feature may be helpful in scenarios where there may be dissimilar bit fields in an offset across devices, and may be particularly useful for XM protocol register accesses as they are common registers implemented by all XM compliant devices. In Figure 8 two example {Byte-Enable, Byte} pairs are shown, a first one 813 for the first control byte, Byte 0, which is written to the protocol register at the offset indicated in additional header byte 810, and a second pair 817, for the last control byte, Byte n, which is written to the protocol register at the offset indicated in additional header byte 810 + n, or, at XM-Reg[offset+n]. In each case, only the bits of control byte "Byte 0" or "Byte n" that are enabled by their respective masking byte, "Byte enable 0" or "Byte enable n" are written to the indicated register.

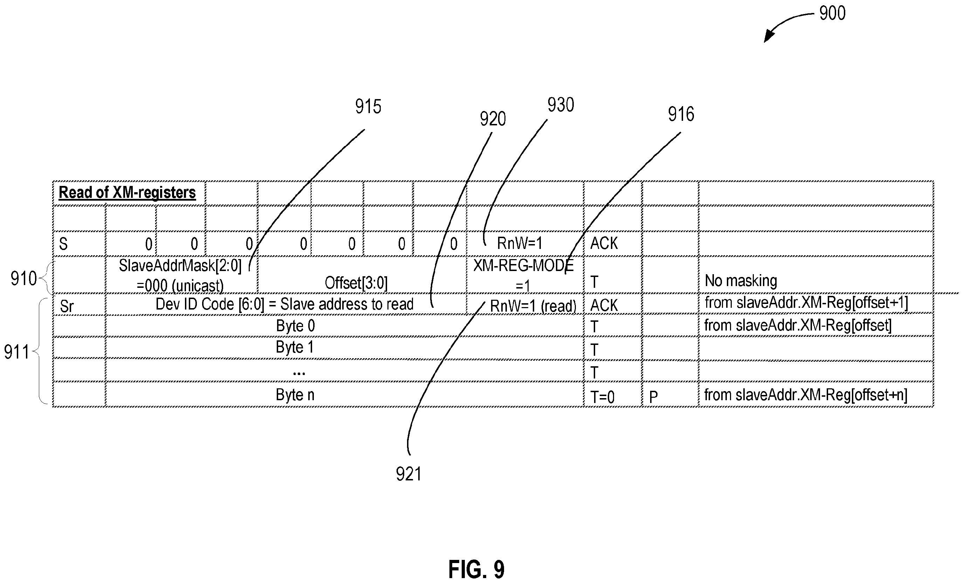

In the example commands discussed so far, all of them have been write accesses, where the command directs a receiving device to, for example, update either a protocol register or an internal device register. It is understood that only a write operation can be truly broadcast to multiple devices, as opposed to a read which is specific to the contents of one or more registers on a single device. Figure 9 illustrates an example command 900 for a read of n XM protocol registers of a specific device, in accordance with various embodiments. Command 900 is the read version of command 300B of Figure 3B, where command 900 only includes an address for one device. Thus, continuing with reference to Figure 9, command 900 indicates at 930, and at 921, that RnW = 1, indicating a read operation. Additionally, additional header byte 910 provides, in slave address mask field 915, a value of "000" indicating no masking, and thus a unicast operation, and, access mode indicator 916 provides that protocol registers are to be read. Sr transaction 911 that follows thus specifies that n bytes of data, from protocol registers at slaveAddr.XM-Reg[offset] through slaveAddr.XM-Reg[offset+n], respectively be read. In embodiments, when the device responds to the read command, it labels these respective data bytes as "Byte 0" through "Byte n."

It is noted that, in embodiments, XM protocol register read access to same register offset across 120 devices, as well as XM Register writes to same register offset across 120 devices will be more efficient than under the current XMS. Moreover, broadcast access improves several fold, as, in embodiments, a host computer may continue to use broadcast commands even though some devices may have non-identical values in some of the specified control flag bits, which under the current protocol is not possible.

In embodiments, a capability to address/multi-cast to the same device type across multiple DIMMs is enabled, as well as the capability to access a specific set of XM protocol registers per device. This feature thus enables a standard mechanism for protocol feature control, such as, for example, PEC enable, IBI on/off, etc. As shown in Figure 9, reads to these devices are handled with the same command, but in unicast mode, with SlaveAddrMask = 000, as noted above.

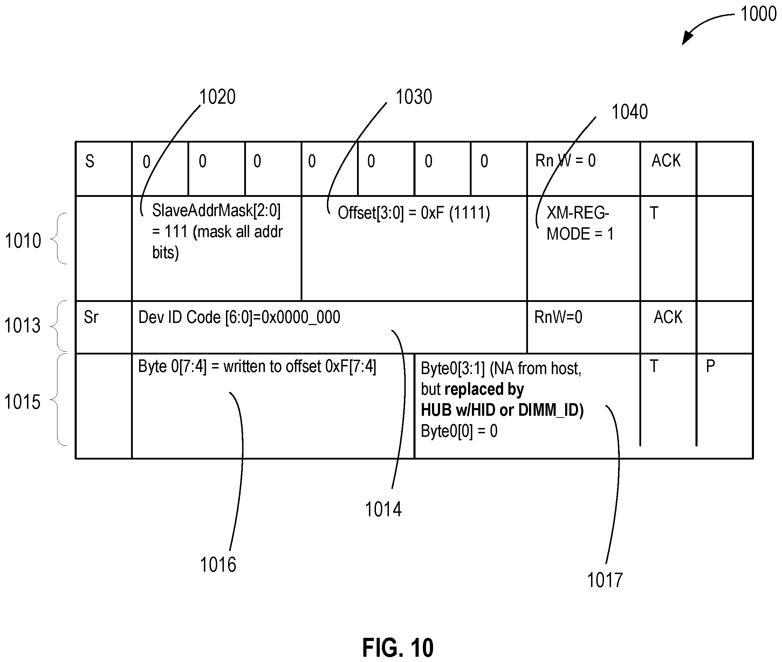

Next described, with reference to Figures 10 through 12, is a method for assigning, during run time, unique addresses to devices on memory modules (e.g., DIMMs), the devices being connected to a hub of the memory module across a local bus. In embodiments, the method leverages the expanded broadcast command format described above with reference to Figure 3A, for a full broadcast to all XM protocol registers at a given offset on each device, by a host computer. However, in embodiments, the method, and an example broadcast command format to implement it, directs the hub or gateway of a DIMM, following receipt of the broadcast command, to then modify the device address included in the command from that received from the host computer, to a different value, prior to forwarding the command to all devices "behind the hub" on the DIMM.

Prior to describing the method of Figures 10 through 12, however, some background on DIMM manufacture is first described. In order to ensure that memory modules, such as, for example DIMMs, are reusable and configurable across all slots of a motherboard or computing device, all DIMMs are built to be identical, with a host id ("HID", or "DIMM ID") to be detected through a precision resistor by a hub of the memory module, such as, for example a SPD device, once it is inserted. Thus, at manufacture, the default address for all devices on the DIMM is the same, irrespective of the actual host_id (e.g., DIMM_ID) of the slot in which the memory module is eventually inserted.

Therefore, to ensure that all devices on a DIMM may be seamlessly addressed by a host computer, the hub must either continually translate an address coming from the host computer to the local device addresses, or, alternatively, the devices on the DIMM that are "behind the hub", must be made aware of their actual host_id, so that when they are addressed by a host computer, for example, via one of the example commands shown in Figures 2-9 and described above, they may respond to the command appropriately.

Further, a hub of a DIMM is preferably made to be as inexpensive as possible, without implementing PEC or store-forward schemes. Moreover, because a hub does not have an independent clock source, it does not process data on its own. Thus, an ideal hub is a passive pass gate based implementation, which transports a transaction from one domain (e.g., command bus) to another (e.g., local device bus) and assists in reducing and balancing bus loads so that as many devices may be attached to a command bus as possible.

Alternatively, a one-time-programmable address may be assigned to each device during manufacturing. However, this adds to manufacturing costs. Still alternatively, the hub may, on an ongoing basis, manage addresses for each transaction or command received from a host computer, e.g., translate the device address used in a transaction or command to the actual DIMM_ID of the slot it is connected to, but this adds significant workload and complexity.

Accordingly, in embodiments, a first access mode full broadcast command, as described above, is used by a host computer to cause each hub, on each DIMM, to push the hub's host identifier (e.g., DIMM_ID) to all local bus devices on its DIMM.

In embodiments, in this specific DIMM_ID propagation transaction, upon receipt of the broadcast command from the host computer, the hub of each DIMM changes certain bits of the device address included in the broadcast command, prior to forwarding the broadcast command to the local bus. In particular, the hub replaces HID/LID bits in the payload of the broadcast message received from the host computer. Additionally, in embodiments, enabling PEC for such a configuration/broadcast HID propagation transaction is accomplished using a relatively simple 8:1 look up table. This is because all bit values of the HID propagating transaction are known a priori, the PEC may be a pre-calculated value based on the DIMM_ID to be inserted.

It is noted, however, that devices can still work with their default addresses in non-hub environments, as long as the device addresses are unique, or a hub alters the device address for each and every transaction. Thus, the broadcast DIMM ID propagation transaction according to various embodiments is not a must, as devices may operate seamlessly without it. This assumes, however, that in non-hub cases, the device addresses are unique, and in hub cases, for this to work without HID propagation, the hub must alter the destination address for each and every transaction (pvt/direct).

In embodiments, an XM broadcast transaction described above is combined with XM register access to update a HID/DIMM_ID on devices connected on a local bus. As described in detail below, in embodiments, a hub can detect this specific command, and replace just the HID/LID field of the command, and, if enabled, the PEC.

In embodiments, all devices on local bus must be XM-bus compliant and implement the following mandatory capabilities:
1. Support broadcast transaction (can accept transactions with SlaveAddr = 0x0000_000);
2. Has a programmable HID/DIMM_ID:
   a. XM-Register offset of 0xF as the Slave device ID - specifically bits [2:0], because the programmable (write-once, after reset) HID/DIMM_ID defaults to "111"; and
3. Able to decode its specific address of {4b DTI, 3b HID (programmed)}.

In embodiments, a device, may, in order to be I2C compliant, derive the default slave address from pin straps, as a default. If so, the device then provides this address as the default value of the XM protocol register[0xF] for any host, with or without a hub, to read it later.

In embodiments, upon receiving the above specified broadcast transaction, a gateway or hub of a DIMM updates the lower three bits (or, for example, greater or lesser bits in other or extended applications) of the incoming value to set the DIMM_ID/HID specific address. In embodiments, a host may send this broadcast command as the very first transaction during bus initialization, and, in embodiments, the transaction may be done as a single broadcast write transaction across the entire set of devices connected on each DIMM.

Figure 10, next described, illustrates an example format for such a host identifier (HID) assignment transaction in accordance with various embodiments. With reference to Figure 10, in embodiments, the HID configuration transaction updates the HID/DIMM_ID into XM protocol register[15] of every device on a DIMM. It is noted that the use of XM protocol register[15] is a specific implementation, as indicated by Offset[3:0] = 1111 in row 1010 of Fig 10. Row 1010 in Fig 10 (and similar rows of all other figures) are presented as examples, and in other embodiments, other combinations may be used. For example, an offset may be reduced to two bits.

Continuing with reference to Figure 10, the example format for the broadcast command is essentially identical to the example full broadcast to XM protocol registers command of Figure 3A, however, in the command of Figure 10, only one control byte being updated in the Sr transaction. Thus, as shown in Figure 10, following the initial broadcast call address byte, additional header byte 1010 provides, in slave address mask field 1020, a mask of "111." As described above, this masks all seven bits of the device address, which guarantees a full broadcast. Additional header byte 1010 also provides, in offset field 1030, a register offset of 0xF, which is register[15]. It is this offset value, when decoded, that, together with the access mode value 1040, that indicates to each hub that this is a host_id propagation command, and that the hub is to replace a portion of the address provided in the command with a DIMM_ID that the hub has obtained. Thus, additional header byte 1010 provides an access mode indicator 1040 of XM-REG-MODE = 1, indicating the first access mode, where an XM control or protocol register is updated.

Continuing with reference to Figure 10, following additional header byte 1010 is an Sr transaction, including Sr header byte 1013, and a "payload" or control data byte 1015. Sr header byte 1013 has the full broadcast device address of 000_0000, as in Figure 3A, and also indicates that the memory access is a write operation, e.g., write the address to register 15. Following the Sr header byte 1013, is the control data byte 1015. As noted, in contrast to the full broadcast command to XM registers of Figure 3A, in the example command 1000 of Figure 10, only one control data byte is included, control data byte ByteO. It has two fields. A first field 1016, directing the device to write the first four MSBs of ByteO, Byte0[7:4], to register 15, and a second field 1017, directing the device to write the first three LSBs of ByteO, Byte0[3:1] to the same register, and finally, to write a "0" to the last LSB of that register, indicated at field 1017 by Byte0[0] = 0. The three LSBs [3:1] are thus modified by the hub prior to the hub passing broadcast command 1000 to the devices on its DIMM. These three bits are obtained by the hub from the slot into which the DIMM has been inserted, as noted above, from a precision register. Thus after the command has been implemented by each device, Register[15] will have the following bit values: Bit[0] will be zero, Bits[3:1] are what is replaced with the HUB/DIMM_ID, and Bits[7:4] = "0000."

In the specific examples presented herein, the intent is to address eight DIMMs. Thus, three LSBs of the address are replaced by the hub. As noted above, in this example the four MSBs indicate the device type. In other embodiments, there may be fewer, or greater number of DIMMs to be addressed, and thus there may be fewer or more LSBs that need to be replaced by the hub with the branch-id (or HUB/DIMM_ID).

In embodiments, if PEC is enabled, this is done by including in command 1000 an additional control byte in the Sr transaction, following control byte ByteO at 1015.

Being XMS compliant, upon receipt of command 1000, the hub passes the assigned address of ByteO (ABCD_HID) and the broadcast address (0000_000) 1013.

The hub must be able to update/replace Byte0[3:1] its HID/DIMM ID (static replacement - from value derived from) into 3 bits of a specific transaction as described below - while the transaction is passed from host bus to local bus.

In embodiments, the hub performs the host_id update, if and only if all of the following conditions are satisfied for an incoming broadcast:
XM-MODE-REG 1040 is 1;
Offset[3:0] 1030 = 1111; and
SlaveAddressMask[2:0] 1020 = 111.
If so, then, in embodiments, the hub will, on the local bus, replace the LSB three bits of ByteO with the DIMM_ID/hostID that it has been assigned.

In embodiments, all local devices will accept the modified form of command 1000 as an XM broadcast transaction, and update their DIMM_ID/hostID. This written value now over-rides all previously known/assigned addresses to the device. In some embodiments, register at offset 0xF may be implemented in a write-once mode to ensure that no malicious agent can reprogram the HID after a secure boot up process. In other embodiments, a different register may be used to store an HID, as noted above, Register[15] being merely exemplary.

In embodiments, even with PEC enabled for broadcast, the PEC for the first command segment 1010 holds well. The PEC for the second command segment 1013 is essentially the PEC for precisely a one byte slave-address = 0x0 and one byte of data, that can be easily replaced by a hub. To simplify further, in embodiments, the value of Byte0[7:3] may be defined as 0x0, so that the PEC becomes PEC of all 0s with just a three bit DIMM_ID, and thus a straight lookup table with eight entries. The incoming PEC value is always a fixed CRC-8 of 0x0000 (two bytes of all zeroes).

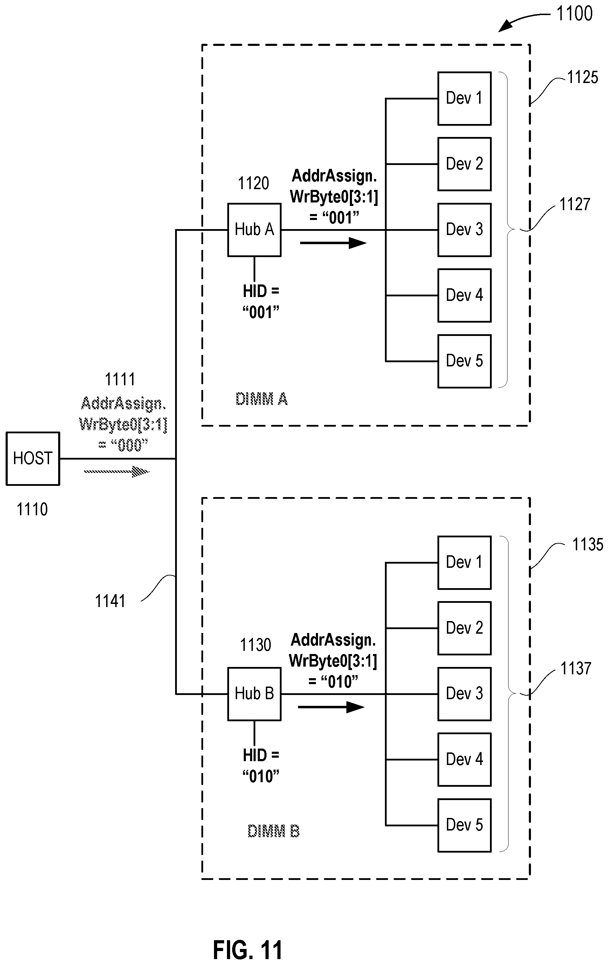

Figure 11 illustrates an example update of a DIMM_ID of devices provided on the DIMM via a host computer full broadcast command, such as shown in Figure 10, in accordance with various embodiments. With reference to Figure 11, host computer 1110 broadcasts an address assignment command 1011, such as 1000 of Figure 10. The command includes a control data byte, e.g., ByteO 1015 of Figure 10, and instructs a receiving device to write the host_id "000" to the LSBs of register 15 of the device. Command is sent on command bus 1141, which, in embodiments, is an XMS compliant bus. Command 1111 is received in the hubs of each DIMM connected to the command bus 1141, for example, hub 1120 of DIMMA 1125, and hub 1130 of DIMM B 1135. Upon receipt of the command, the hubs respectively decode it, and determine that the command is a host_id propagation command. As a result, as shown in Figure 11, hubs 1120 and 1130 change the three LSBs from the original value of "000" sent by the host, to "001" in the case of hub 1120 on DIMM A 1125, and to "010" in the case of hub 1130 on DIMM B 1135, in the broadcast command 1111 prior to forwarding it across each DIMM's local bus. These modified values for the three LSBs are a function of the slot into which each DIMM is inserted, and obtained by the hubs from a precision resistor, as described above. Once each hub makes the modification to command 1111, the command is sent to all devices on the DIMM. For example, hub 1120 sends its specifically modified command to devices 1127 on DIMMA 1125, and hub 1130 sends its specifically modified command to devices 1137 on DIMM B 1135, as shown.

As noted above, besides the special case of the command 1000 of Figure 10, in general a hub simply forwards a received broadcast command to devices on the hub. Thus, for addressed DIMMs, all transaction clock phases are transparently transported to the local bus and back (for read clocks), with no additional processing.

In embodiments, once the HID propagation is completed successfully, and a new command is issued, the hub can identify (based on the LSB 3 bits of address) whether it's branch/local bus is being addressed or not. If it is not being addressed, the hub may terminate the transaction with a NACK.

In the case of an un-addressed or un-selected DIMMs, an un-addressed hub may abort/terminate the command transaction on its local bus,

Even in the case of an incoming DIMM_ID matching a local bus tie-off of 3'b111, which addresses DIMM#8, what happens on other DIMMs, since local bus is using 3'b111. However, it is noted that if the HID/DIMM_ID assignment using a broadcast command, as described above, is performed, this scenario does not arise.

Nonetheless, to address error scenarios where the HID/DIMM_ID assignment was missed as a programming step, a hub performing the abort helps to reduce bus contention/multiple drivers on the host bus.

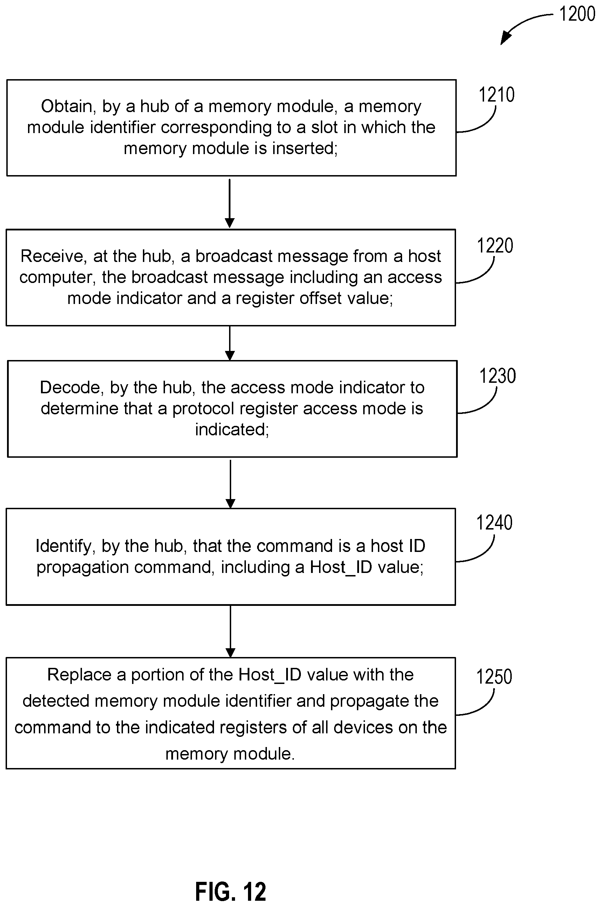

Referring now to Figure 12, an overview of the operational flow of a process 1200 for obtaining, by a hub of a memory module, a memory module identifier, receiving a broadcast host_ID propagation command from a host, modifying the host_ID of the received command, and propagating the command to all devices on the memory module, in accordance with various embodiments. Thus, process 1200 recites in detail the actions taken by a hub of a DIMM as described above in connection with Figure 11, in response to receipt of a command such as command 1000 of Figure 10.

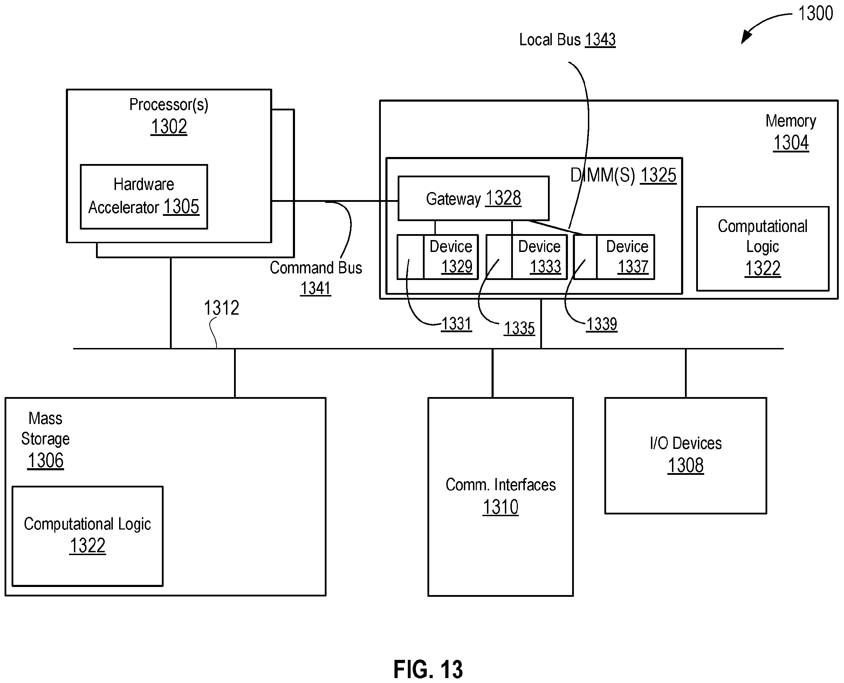

Process 1200 may be performed by a gateway or hub of a memory module, such as, for example, gateway 130 of Figure 1, or, for example, gateway 1328 of Figure 13, in accordance with various embodiments. Process 1200 may, for example, be performed, at least in part, by decoding circuitry in the hub, such as, for example, decoding circuitry 133 of gateway 130 of Figure 1.Process 1200 may include blocks 1210 through 1250. In alternate embodiments, process 1200 may have more or less operations, and some of the operations may be performed in different order.

With reference to Figure 12, process 1200 begins at block 1210, where a hub of a memory module obtains a memory module identifier corresponding to a slot into which the memory module is inserted. For example, a hub of a DIMM accesses, via a precision register, which DIMM slot number the DIMM is inserted into For example, in a memory system with eight DIMMs, the memory module identifier may be a three bit number.

From block 1210, process 1200 proceeds to block 1220, where the hub receives a broadcast message from a host computer, the broadcast message including an access mode indicator and a register offset value. For example, the broadcast message may be a command equivalent to command 1000 of Figure 10, indicating a first access mode, and a register offset value of"1111" pointing to register[15], as an example implementation. In other examples, using other example commands, various other registers may be pointed to.

From block 1220, process 1200 moves to block 1230, where the hub decodes the access mode indicator to determine that a protocol register access mode is indicated, such as, for example, in a system where a first access mode of XM control or protocol registers is indicated by a flag having a value of "1", XM-REG-MODE flag is a "1."

From block 1230, process 1200 moves to block 1240, where the hub identifies that the command is a host ID propagation command, including a Host_ID value. For example, using the command of Figure 10, given the combination of an offset pointing to register[15], a slave mask value of "111", and a read not write flag set to a value indicating a "write", for example RnW=0, decoding circuitry in the hub recognizes that the received command is a special host ID propagation command where the hub is to modify a portion of the control data bits provided in ByteO.

Finally, from block 1240, process 1200 moves to block 1250, where the hub replaces a portion of the Host_ID value with the detected memory module identifier and propagates the now modified command to all devices on the memory module. For example, as shown in Figure 11, following modification of the three LSBs of command 1111, hubs 1120 and 1130 respectively send command 111, as modified, on their respective local buses in DIMMs 1125 and 1135, respectively.

Referring now to Figure 13 wherein a block diagram of a computer device suitable for practicing the present disclosure, in accordance with various embodiments, is illustrated. As shown, computer device 1300 may include one or more processors 1302, and system memory 1304. Each processor 1302 may include one or more processor cores, and hardware accelerator 1305. An example of hardware accelerator 1305 may include, but is not limited to, programmed field programmable gate arrays (FPGAs) (not shown).

Computer device 1300 may also include system memory 1304. In embodiments, system memory 1304 may include any known volatile or non-volatile memory, such as DIMMs 1325. DIMMs 1325 may be connected via command bus 1341 to processors 1302. Additionally, computer device 1300 may include mass storage device(s) 1306, input/output device interfaces 1308 (to interface with various input/output devices, such as, mouse, cursor control, display device (including touch sensitive screen), and so forth) and communication interfaces 1310 (such as network interface cards, modems and so forth). In embodiments, communication interfaces 1310 may support wired or wireless communication, including near field communication. The elements may be coupled to each other via system bus 1312, which may represent one or more buses. In the case of multiple buses, they may be bridged by one or more bus bridges (not shown).

In embodiments, DIMMs 1325 may include gateway 1328, including an input interface (not shown due to size of figure, but described above with reference to Figure 1) decoding circuitry 1327, and a set of devices, for example, device 1329, device 1333 and device 1337, which may include, respectively, input interfaces (not shown) and decoding circuitry 1331, 1335 and 1339. Devices 1329, 1333 and 1337 may be connected across a local bus 1343, provided within DIMM 1325, to gateway 1328.

In embodiments, system memory 1304 and mass storage device(s) 1306 may be employed to store a working copy and a permanent copy of the executable code of the programming instructions of an operating system, one or more applications, and/or various software implemented components of decoding circuitry 133 of gateway 130, and decoding circuitry 135 in each of Devices A, B and C which are provided "behind gateway 130", as shown in Figure 1, or decoding circuitry 1327 within gateway 130, and decoding circuitry 1331, 1335 and 1339 in each of Devices 1329, 1333 and 1337, which are provided "behind gateway 1328", as shown in Figure 13, collectively referred to as computational logic 1322. The programming instructions implementing computational logic 1322 may comprise assembler instructions supported by processor(s) 1302 or high-level languages, such as, for example, C, that can be compiled into such instructions. In embodiments, some of computing logic may be implemented in hardware accelerator 1305. In embodiments, part of computational logic 1322, e.g., a portion of the computational logic 1322 associated with the runtime environment of the compiler may be implemented in hardware accelerator 1305.

The permanent copy of the executable code of the programming instructions or the bit streams for configuring hardware accelerator 1305 may be placed into permanent mass storage device(s) 1306 and/or hardware accelerator 1305 in the factory, or in the field, through, for example, a distribution medium (not shown), such as a compact disc (CD), or through communication interfaces 1310 (from a distribution server (not shown)).

The number, capability and/or capacity of these elements 1302-1333 may vary, depending on the intended use of example computer device 1300, e.g., whether example computer device 1300 is a smartphone, tablet, ultrabook, a laptop, a server, a set-top box, a game console, a camera, and so forth. The specific constitutions of elements 1310-1343 are otherwise known, and accordingly will not be further described.

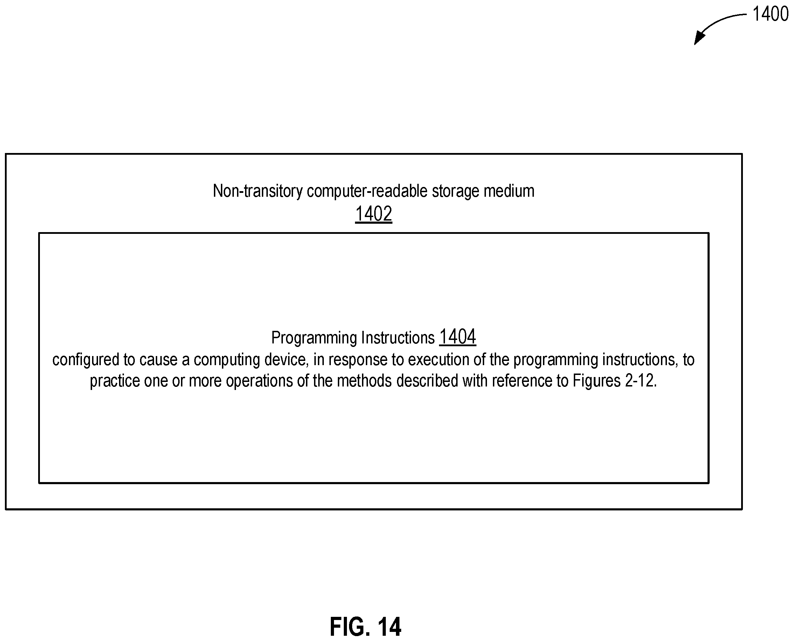

Furthermore, the present disclosure may take the form of a computer program product or data to create the computer program, with the computer program or data embodied in any tangible or non-transitory medium of expression having the computer-usable program code (or data to create the computer program) embodied in the medium. Figure 14 illustrates an example computer-readable non-transitory storage medium that may be suitable for use to store instructions (or data that creates the instructions) that cause an apparatus, in response to execution of the instructions by the apparatus, to practice selected aspects of the present disclosure. As shown, non-transitory computer-readable storage medium 1402 may include a number of programming instructions 1404 (or data to create the programming instructions). Programming instructions 1404 may be configured to enable a device, e.g., device 1300, or components thereof, in response to execution of the programming instructions, to perform, e.g., various programming operations associated with operating system functions, one or more applications, and/or aspects of the present disclosure.

In alternate embodiments, programming instructions 1404 (or data to create the instructions) may be disposed on multiple computer-readable non-transitory storage media 1402 instead. In alternate embodiments, programming instructions 1404 (or data to create the instructions) may be disposed on computer-readable transitory storage media 1402, such as, signals. Any combination of one or more computer usable or computer readable medium(s) may be utilized. The computer-usable or computer-readable medium may be, for example but not limited to, one or more electronic, magnetic, optical, electromagnetic, infrared, or semiconductor systems, apparatuses, devices, or propagation media. More specific examples (a non- exhaustive list) of a computer-readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. Note that the computer-usable or computer-readable medium could even be paper or another suitable medium upon which the program (or data to create the program) is printed, as the program (or data to create the program) can be electronically captured, via, for instance, optical scanning of the paper or other medium, then compiled, interpreted, or otherwise processed in a suitable manner, if necessary, and then stored in a computer memory (with or without having been staged in or more intermediate storage media). In the context of this document, a computer-usable or computer-readable medium may be any medium that can contain, store, communicate, propagate, or transport the program (or data to create the program) for use by or in connection with the instruction execution system, apparatus, or device. The computer-usable medium may include a propagated data signal with the computer-usable program code (or data to create the program code) embodied therewith, either in baseband or as part of a carrier wave. The computer usable program code (or data to create the program) may be transmitted using any appropriate medium, including but not limited to wireless, wireline, optical fiber cable, RF, etc.

In various embodiments, the program code (or data to create the program code) described herein may be stored in one or more of a compressed format, an encrypted format, a fragmented format, a packaged format, etc. Program code (or data to create the program code) as described herein may require one or more of installation, modification, adaptation, updating, combining, supplementing, configuring, decryption, decompression, unpacking, distribution, reassignment, etc. in order to make them directly readable and/or executable by a computing device and/or other machine. For example, the program code (or data to create the program code) may be stored in multiple parts, which are individually compressed, encrypted, and stored on separate computing devices, wherein the parts when decrypted, decompressed, and combined form a set of executable instructions that implement the program code (the data to create the program code( such as that described herein. In another example, the Program code (or data to create the program code) may be stored in a state in which they may be read by a computer, but require addition of a library (e.g., a dynamic link library), a software development kit (SDK), an application programming interface (API), etc. in order to execute the instructions on a particular computing device or other device. In another example, the Program code (or data to create the program code) may need to be configured (e.g., settings stored, data input, network addresses recorded, etc.) before the program code (or data to create the program code) can be executed/used in whole or in part. Thus, the disclosed Program code (or data to create the program code) are intended to encompass such machine readable instructions and/or program(s) (or data to create such machine readable instruction and/or programs) regardless of the particular format or state of the machine readable instructions and/or program(s) when stored or otherwise at rest or in transit.

Computer program code for carrying out operations of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Figure 14 illustrates an example computer-readable storage medium 1400 having instructions configured to implement all (or portion of) software implementations of decoding circuitry 133 of gateway 130, and decoding circuitry 135 in each of Devices A, B and C which are provided "behind gateway 130", as shown in Figure 1, or decoding circuitry 1327 within gateway 130, and decoding circuitry 1331, 1335 and 1339 in each of Devices 1329, 1333 and 1337, which are provided "behind gateway 1328", as shown in Figure 13, and/or practice (aspects of) sending and processing commands 200 through 1000 of Figures 2 through 10, and/or practice processes 1100 of Figure 11, and 1200 of Figure 12, earlier described, in accordance with various embodiments. As illustrated, computer-readable storage medium 1402 may include the executable code of a number of programming instructions or bit streams 1404. Executable code of programming instructions (or bit streams) 1404 may be configured to enable a device, e.g., computer device 1300, in response to execution of the executable code/programming instructions (or operation of an encoded hardware accelerator 1305), to perform (aspects of) processes performed by decoding circuitry 133 of gateway 130, and decoding circuitry 135 in each of Devices A, B and C which are provided "behind gateway 130", as shown in Figure 1, or decoding circuitry 1327 within gateway 130, and decoding circuitry 1331, 1335 and 1339 in each of Devices 1329, 1333 and 1337, which are provided "behind gateway 1328", as shown in Figure 13, and/or practice (aspects of) sending and processing commands 200 through 1000 of Figures 2 through 10, and/or practice processes 1100 of Figure 11, and 1200 of Figure 12. In alternate embodiments, executable code/programming instructions/bit streams 1404 may be disposed on multiple non-transitory computer-readable storage medium 1402 instead. In embodiments, computer-readable storage medium 1402 may be non-transitory. In still other embodiments, executable code/programming instructions 1404 may be encoded in transitory computer readable medium, such as signals.

Referring back to Figure 13, for one embodiment, at least one of processors 1302 may be packaged together with a computer-readable storage medium having some or all of computing logic 1322 (in lieu of storing in system memory 1304 and/or mass storage device 1306) configured to practice all or selected ones of the operations earlier described with reference to Figures 2-12. For one embodiment, at least one of processors 1302 may be packaged together with a computer-readable storage medium having some or all of computing logic 1322 to form a System in Package (SiP). For one embodiment, at least one of processors 1302 may be integrated on the same die with a computer-readable storage medium having some or all of computing logic 1322. For one embodiment, at least one of processors 1302 may be packaged together with a computer-readable storage medium having some or all of computing logic 1322 to form a System on Chip (SoC). For at least one embodiment, the SoC may be utilized in, e.g., but not limited to, a hybrid computing tablet/laptop.

Illustrative examples of the technologies disclosed herein are provided below. An embodiment of the technologies may include any one or more, and any combination of, the examples described below.

## Claims

1. A first device for being part of a plurality of devices (120, 121, 122) arranged on a memory module (104), the first device comprising:
an input interface (134) configured to receive a broadcast command from a host computer (103), wherein the broadcast command includes one or more device addresses, and is directed to the devices (120, 121, 122) arranged on the memory module and is received by a gateway (130) of the memory module coupled to the host computer over a command bus (141), and then received by the input interface from the gateway over a local bus (143) within the memory module, wherein the command bus and the local bus are compliant with the XM specification of the Joint Electron Device Engineering Council, XMS, the XMS defines a header that includes a seven bits device address and a Read-not-Write, RnW, bit, wherein the broadcast command includes: an additional header byte to be provided within the header defined in the XMS, wherein the additional header byte includes a slave address mask field having masking data to selectively mask addresses of the devices to be accessed via the local bus and the command bus to thereby selectively direct the broadcast command to a portion or all of the devices, wherein if the slave address mask field is configured to mask all bits of the addresses of the devices, the broadcast command is to address all of the devices, wherein if the slave address mask field is configured to mask no bits of the addresses of the devices, the broadcast command is to address one of the devices according to a device address in the broadcast command, wherein if the slave address mask field is configured to mask a subset of the addresses of the devices, the broadcast command is to address those of the devices whose addresses match to an unmasked portion of the device address in the broadcast command; wherein the broadcast command further includes an offset field, and an access mode indicator, to indicate an access mode for the broadcast command, wherein the access mode includes first and second access modes, wherein the first access mode provides that the broadcast command is to access pre-defined setup or control registers of the devices, and wherein the second access mode provides that the broadcast command is to access internal registers of the devices, wherein the offset field is used in the first access mode for accessing the pre-defined setup or control registers, and is not used in the second access mode; and
decoding circuitry (135) coupled with the interface configured to:
ignore a portion of the one or more device addresses as indicated by the device address masking data;
determine if a remaining portion of the one or more device addresses matches a corresponding portion of its own address;
determine, based at least in part on the received access mode indication, that the broadcast command is directed to either access the pre-defined setup or control registers of the devices, or to access the internal registers of the devices; and
in response to the determination, implement the access to either the predefined setup or control registers, or to the internal registers,
wherein the internal registers are accessible at pre-defined offsets prescribed by the XMS, and the internal registers are not the predefined setup or control registers.

2. The first device of claim 1, wherein the memory module includes a dual in-line memory module, DIMM.

3. The first device of claim 1, wherein each of the devices is one of: a voltage regulator, a temperature sensor, a flash memory storing timing information, a serial presence detect, SPD, device or a registering clock driver, RCD.

4. The first device of claim 1, wherein the one or more device addresses included in the broadcast command are seven bits long, and wherein the device address masking data is configured to indicate that between one and seven least significant bits, LSBs, of the one or more device addresses are to be ignored.

5. The first device of any of claims 1 to 4, wherein the broadcast command further includes an offset specifying a location of an initial pre-defined setup or control register, or internal register, of the devices at which to begin the indicated access.

6. A memory module (104), comprising: the first device of any of claims 1 to 5.

7. A method of operating the first device of any of claims 1 to 5, comprising:
receiving a broadcast command from a host computer, the broadcast command directed to writing of setup or control data to the registers of the devices of the memory module beginning at an offset, and including a device address and device address masking data;
applying the device address masking data to mask a portion of the device address;
determining if an unmasked portion of the device address matches a corresponding portion of respective addresses of the devices; and
in response to the determination, writing the data to the registers of the devices beginning at the offset.

8. The method of claim 7, further comprising: decoding the access mode indicator to determine that the access mode indicates the first access mode, wherein the pre-defined setup or control registers are prescribed by the XMS, and the data includes control data to be written to the specified pre-defined control registers, wherein the control data is in multiples of two byte pairs, the two byte pairs including a control data byte and a corresponding mask byte, the corresponding mask byte indicating which bits of the data byte are to be written to a pre-defined control register of the device, and which bits of the data byte are to be ignored.

9. The method of any of claims 7 to 8, wherein the device address masking data is arranged such that the data is to be written to the same type of device across multiple memory modules connected to the host computer via the command bus.

10. A non-transitory computer-readable storage media comprising a set of instructions which, when executed by a processor of the first device of any of claims 1 to 5, cause the processor to perform the method of any of claims 7 to 9.

## Patentansprüche

1. Erste Vorrichtung, um Teil einer Mehrzahl von Vorrichtungen (120, 121, 122) zu sein, die auf einem Speichermodul (104) angeordnet sind, wobei die erste Vorrichtung umfasst:
eine Eingabeschnittstelle (134), die dazu ausgelegt ist, einen Ausstrahlungsbefehl von einem Host-Computer (103) zu empfangen, wobei der Ausstrahlungsbefehl eine oder mehrere Vorrichtungsadressen beinhaltet und an die auf dem Speichermodul angeordneten Vorrichtungen (120, 121, 122) gerichtet ist und von einem mit dem Host-Computer über einen Befehlsbus (141) gekoppelten Gateway (130) des Speichermoduls empfangen wird und dann von der Eingabeschnittstelle von dem Gateway über einen lokalen Bus (143) innerhalb des Speichermoduls empfangen wird, wobei der Befehlsbus und der lokale Bus mit der XM-Spezifikation des Joint Electron Device Engineering Council, XMS, konform sind, die XMS einen Header definiert, der eine sieben Bit lange Vorrichtungsadresse und ein Read-not-Write-Bit, RnW, beinhaltet, wobei der Ausstrahlungsbefehl Folgendes beinhaltet: ein zusätzliches Header-Byte, das innerhalb des im XMS definierten Headers vorzusehen ist, wobei das zusätzliche Header-Byte ein Slave-Adressmaskenfeld mit Maskierungsdaten zum selektiven Maskieren von Adressen der Vorrichtungen, auf die über den lokalen Bus und den Befehlsbus zugegriffen werden soll, beinhaltet, um dadurch den Ausstrahlungsbefehl selektiv an einen Teil oder alle der Vorrichtungen zu richten, wobei, wenn das Slave-Adressmaskenfeld dazu ausgelegt ist, alle Bits der Adressen der Vorrichtungen zu maskieren, der Ausstrahlungsbefehl dazu dient, alle Vorrichtungen zu adressieren, wobei, wenn das Slave-Adressmaskenfeld dazu ausgelegt ist, keine Bits der Adressen der Vorrichtungen zu maskieren, der Ausstrahlungsbefehl dazu dient, eine der Vorrichtungen gemäß einer Vorrichtungsadresse in dem Ausstrahlungsbefehl zu adressieren, wobei, wenn das Slave-Adressmaskenfeld dazu ausgelegt ist, eine Teilmenge der Adressen der Vorrichtungen zu maskieren, der Ausstrahlungsbefehl dazu dient, diejenigen der Vorrichtungen zu adressieren, deren Adressen mit einem nicht maskierten Teil der Vorrichtungsadresse in dem Ausstrahlungsbefehl übereinstimmen; wobei der Ausstrahlungsbefehl ferner ein Offset-Feld und einen Zugriffsmodus-Indikator beinhaltet, um einen Zugriffsmodus für den Ausstrahlungsbefehl anzugeben, wobei der Zugriffsmodus einen ersten und einen zweiten Zugriffsmodus beinhaltet, wobei der erste Zugriffsmodus vorsieht, dass der Ausstrahlungsbefehl auf vordefinierte Einstell- oder Steuerregister der Vorrichtungen zugreift, und wobei der zweite Zugriffsmodus vorsieht, dass der Ausstrahlungsbefehl auf interne Register der Vorrichtungen zugreift, wobei das Offset-Feld im ersten Zugriffsmodus zum Zugreifen auf die vordefinierten Einstell- oder Steuerregister verwendet wird und im zweiten Zugriffsmodus nicht verwendet wird; und
Decodierschaltkreis (135), der mit der Schnittstelle gekoppelt und dazu ausgelegt ist:
einen Teil der einen oder mehreren Vorrichtungsadressen wie durch die Vorrichtungsadressen-Maskierungsdaten angegeben zu ignorieren;
zu bestimmen, ob ein verbleibender Teil der einen oder mehreren Vorrichtungsadressen mit einem entsprechenden Teil der eigenen Adresse übereinstimmt;
zumindest teilweise basierend auf der empfangenen Angabe des Zugriffsmodus zu bestimmen, dass der Ausstrahlungsbefehl entweder zum Zugriff auf die vordefinierten Einstell- oder Steuerregister der Vorrichtungen oder zum Zugriff auf die internen Register der Vorrichtungen gerichtet ist; und
als Reaktion auf die Bestimmung den Zugriff entweder auf die vordefinierten Einstell- oder Steuerregister oder auf die internen Register zu implementieren,
wobei auf die internen Register an vordefinierten, durch das XMS vorgegebenen Offsets zugegriffen werden kann und die internen Register nicht die vordefinierten Einstelloder Steuerregister sind.

2. Erste Vorrichtung nach Anspruch 1, wobei das Speichermodul ein Dual-In-Line-Speichermodul, DIMM, beinhaltet.

3. Erste Vorrichtung nach Anspruch 1, wobei jede der Vorrichtungen eine der Folgenden ist: ein Spannungsregler, ein Temperatursensor, ein Flash-Speicher, der Zeitinformationen speichert, eine SPD-Vorrichtung (serial presence detect) oder ein RCD-Treiber (registering clock driver).

4. Erste Vorrichtung nach Anspruch 1, wobei die eine oder mehrere in dem Ausstrahlungsbefehl enthaltene(n) Vorrichtung(en) sieben Bits lang ist/sind und wobei die Vorrichtungsadressen-Maskierungsdaten dazu ausgelegt sind, anzugeben, dass zwischen einem und sieben niedrigstwertigen Bits, LSBs, der einen oder mehreren Vorrichtungsadressen zu ignorieren sind.

5. Erste Vorrichtung nach einem der Ansprüche 1 bis 4, wobei der Ausstrahlungsbefehl ferner einen Offset beinhaltet, der eine Position eines anfänglichen vordefinierten Einstell- oder Steuerregisters oder eines internen Registers der Vorrichtungen angibt, an dem der angegebene Zugriff zu beginnen ist.

6. Speichermodul (104), das umfasst: die erste Vorrichtung nach einem der Ansprüche 1 bis 5.

7. Verfahren zum Betreiben der ersten Vorrichtung nach einem der Ansprüche 1 bis 5, das umfasst:
Empfangen eines Ausstrahlungsbefehls von einem Host-Computer, wobei der Ausstrahlungsbefehl auf das Schreiben von Einstell- oder Steuerdaten in die Register der Vorrichtungen des Speichermoduls gerichtet ist, beginnend bei einem Offset, und eine Vorrichtungsadresse und Vorrichtungsadressen-Maskierungsdaten beinhaltet;
Anwenden der Vorrichtungsadressen-Maskierungsdaten, um einen Teil der Vorrichtungsadresse zu maskieren;
Bestimmen, ob ein unmaskierter Teil der Vorrichtungsadresse mit einem entsprechenden Teil der jeweiligen Adressen der Vorrichtungen übereinstimmt; und als Reaktion auf die Bestimmung, Schreiben der Daten in die Register der Vorrichtungen, beginnend mit dem Offset.

8. Verfahren nach Anspruch 7, das ferner umfasst:
Decodieren des Zugriffsmodus-Indikators, um zu bestimmen, dass der Zugriffsmodus den ersten Zugriffsmodus bestimmt, wobei die vordefinierten Einstell- oder Steuerregister durch das XMS vorgegeben sind und die Daten Steuerdaten beinhalten, die in die vorgegebenen vordefinierten Steuerregister zu schreiben sind, wobei die Steuerdaten in Vielfachen von zwei Bytepaaren vorliegen, wobei die zwei Bytepaare ein Steuerdatenbyte und ein entsprechendes Maskenbyte beinhalten, wobei das entsprechende Maskenbyte angibt, welche Bits des Datenbytes in ein vordefiniertes Steuerregister der Vorrichtung zu schreiben sind und welche Bits des Datenbytes zu ignorieren sind.

9. Verfahren nach einem der Ansprüche 7 bis 8, wobei die Vorrichtungsadressen-Maskierungsdaten so angeordnet sind, dass die Daten über mehrere Speichermodule, die über den Befehlsbus mit dem Host-Computer verbunden sind, in dieselbe Art von Vorrichtung zu schreiben sind.

10. Nichtflüchtiges computerlesbares Speichermedium, das einen Satz von Anweisungen umfasst, die, wenn sie von einem Prozessor der ersten Vorrichtung nach einem der Ansprüche 1 bis 5 ausgeführt werden, den Prozessor veranlassen, das Verfahren nach einem der Ansprüche 7 bis 9 durchzuführen.

## Revendications

1. Premier dispositif conçu pour faire partie d'une pluralité de dispositifs (120, 121, 122) disposés dans un module de mémoire (104), le premier dispositif comprenant :
une interface d'entrée (134) configurée pour recevoir une commande de diffusion en provenance d'un ordinateur hôte (103), la commande de diffusion incluant une ou plusieurs adresses de dispositif, et étant envoyée vers les dispositifs (120, 121, 122) disposés sur le module de mémoire et étant reçue par une passerelle (130) du module de mémoire couplé à l'ordinateur hôte sur un bus de commande (141), puis reçue par l'interface d'entrée en provenance de la passerelle sur un bus local (143) dans le module de mémoire, le bus de commande et le bus local étant conformes à la spécification XM du Joint Electron Device Engineering Council, XMS, le XMS définissant un en-tête qui comporte une adresse de dispositif à sept bits et un bit de lecture sans écriture, RnW, la commande de diffusion incluant: un octet d'en-tête additionnel à prévoir dans l'en-tête défini dans le XMS, l'octet d'en-tête additionnel incluant un champ de masque d'adresse esclave ayant des données de masquage pour masquer sélectivement des adresses des dispositifs auxquels accéder via le bus local et le bus de commande afin de envoyer sélectivement la commande de diffusion vers une partie ou la totalité des dispositifs, où, si le champ de masque d'adresse esclave est configuré pour masquer tous les bits des adresses des dispositifs, la commande de diffusion s'adresse à tous les dispositifs, si le champ de masque d'adresse esclave est configuré pour ne masquer aucun bit des adresses des dispositifs, la commande de diffusion s'adresse à l'un des dispositifs en fonction d'une adresse de dispositif dans la commande de diffusion, si le champ de masque d'adresse esclave est configuré pour masquer un sous-ensemble des adresses des dispositifs, la commande de diffusion s'adresse à ceux des dispositifs dont les adresses correspondent à une partie non masquée de l'adresse de dispositif dans la commande de diffusion ; la commande de diffusion incluant en outre un champ de décalage, et un indicateur de mode d'accès, pour indiquer un mode d'accès pour la commande de diffusion, le mode d'accès incluant des premier et deuxième modes d'accès, le premier mode d'accès prévoyant que la commande de diffusion accède à des registres de configuration ou de contrôle prédéfinis des dispositifs, et le deuxième mode d'accès prévoyant que la commande de diffusion accède à des registres internes des dispositifs, le champ de décalage étant utilisé dans le premier mode d'accès pour l'accès au registres de configuration ou de contrôle prédéfinis, et n'étant pas utilisé dans le deuxième mode d'accès ; et
les circuits de décodage (135) étant couplés à l'interface configurée pour :
ignorer une partie des unes ou plusieurs adresses de dispositif tel qu'indiqué par les données de masquage d'adresse de dispositif ;
déterminer si une partie restante des une ou plusieurs adresses de dispositif correspondent à une partie correspondante de sa propre adresse ;
déterminer, en fonction au moins en partie de l'indication de mode d'accès reçue, que la commande de diffusion est dirigée vers un accès aux registres de configuration ou de contrôle prédéfinis, ou bien vers un accès aux registres internes des dispositifs ; et
en réponse à la détermination, mettre en oeuvre l'accès aux registres de configuration ou de contrôle prédéfinis, ou bien aux registres internes,
les registres internes étant accessibles à des décalages prédéfinies prescrits par le XMS, et les registres internes n'étant pas les registres de configuration ou de contrôle prédéfinis.

2. Premier dispositif selon la revendication 1, dans lequel le module de mémoire inclut un module de mémoire à double rangée de connexions, DIMM.

3. Premier dispositif selon la revendication 1, dans lequel chacun des dispositifs est l'un parmi : un régulateur de tension, un capteur de température, une mémoire flash stockant des informations temporelles, un dispositif de détection de présence en série, SPD, ou un pilote d'horloge à registres, RCD.

4. Premier dispositif selon la revendication 1, dans lequel la ou les adresses de dispositif incluses dans la commande de diffusion font sept bits de long, et dans lequel les données de masquage d'adresse de dispositif sont configurées pour indiquer qu'entre un et sept bits les moins significatifs, LSB, de la ou des adresses de dispositif doivent être ignorés.

5. Premier dispositif selon l'une quelconque des revendications 1 à 4, dans lequel la commande de diffusion comprend en outre un décalage spécifiant une localisation d'un registre de configuration ou de contrôle prédéfini initial, ou d'un registre interne, des dispositifs au niveau de laquelle commence l'accès indiqué.

6. Module de mémoire (104), comprenant : le premier dispositif selon l'une quelconque des revendications 1 à 5.

7. Procédé de fonctionnement du premier dispositif selon l'une quelconque des revendications 1 à 5, comprenant :
la réception d'une commande de diffusion en provenance d'un ordinateur hôte, la commande de diffusion étant destinée à l'écriture de données de configuration ou de contrôle dans les registres des dispositifs du module de mémoire en commençant au niveau d'un décalage, et incluant une adresse de dispositif et des données de masquage d'adresse de dispositif ;
l'application des données de masquage d'adresse de dispositif pour masquer une partie de l'adresse de dispositif ;
la détermination du fait qu'une partie non masquée de l'adresse de dispositif correspond ou non à une partie correspondante d'adresses respectives des dispositifs ; et
en réponse à la détermination, l'écriture des données dans les registres des dispositifs en commençant au niveau du décalage.

8. Procédé selon la revendication 7, comprenant en outre : le décodage de l'indicateur de mode d'accès pour déterminer que le mode d'accès indique le premier mode d'accès, les registres de configuration ou de contrôle prédéfinis étant prescrits par les XMS, et les données incluant des données de contrôle à écrire dans les registres de contrôle prédéfinis spécifiés, les données de contrôle étant agencées en multiples de paires de deux octets, les deux paires de deux octets incluant un octet de données de contrôle et un octet de masque correspondant, l'octet de masque correspondant indiquant quels bits de l'octet de données doivent être dans un registre de contrôle pré-défini du dispositif, et quels bits de l'octet de données doivent être ignorés.

9. Procédé selon l'une quelconque des revendications 7 à 8, dans lequel les données de masquage d'adresse dispositif sont agencées de telle sorte que les données soient écrites dans le même type de dispositif sur les multiples modules de mémoire connectés à l'ordinateur hôte via le bus de commande.

10. Support de stockage non transitoire lisible par ordinateur, comprenant un ensemble d'instructions qui, lorsqu'elles sont exécutées par un processeur du premier dispositif selon l'une quelconque des revendications 1 à 5, amènent le processeur à mettre en oeuvre le procédé selon l'une quelconque des revendications 7 à 9.
